# EUROPÄISCHE PATENTSCHRIFT

(11) **EP 1 194 205 B1**
(45) Veröffentlichungstag und Bekanntmachung des Hinweises auf die Patenterteilung: **23.06.2004**
(21) Anmeldenummer: 01945143.4
(22) Anmeldetag: 17.05.2001
(51) Int. Cl.: B01D 29/11, B01D 29/66, B01D 29/54

(54) **RÜCKSPÜLFILTER, INSBESONDERE FÜR DIE WASSERFILTERUNG UND VERFAHREN ZU DEREN RÜCKSPÜLUNG**
BACKFLUSH FILTER, IN PARTICULAR FOR WATER FILTRATION AND METHOD FOR BACKFLUSHING THEREOF
FILTRE A LAVAGE A CONTRE-COURANT, NOTAMMENT POUR LA FILTRATION D'EAU, ET PROCEDE POUR SON RETROLAVAGE

(30) Priorität: 19.05.2000 DE 10024402
(43) Veröffentlichungstag der Anmeldung: 10.04.2002
(73) Patentinhaber: Boll & Kirch Filterbau GmbH, 50170 Kerpen (DE)
(72) Erfinder: ROTT, Willi, 53332 Bornheim (DE); SINDORF, Heinz, 41569 Rommerskirchen (DE); KANDIAH, Sivagnanam, 50259 Pulheim (DE); LENNARTZ, Rüdiger, 50259 Pulheim (DE)
(74) Vertreter: Althaus, Arndt, Dipl.-Ing.
(86) Internationale Anmeldenummer: PCT/EP2001/005614
(87) Internationale Veröffentlichungsnummer: WO 2001/089658

(56) Entgegenhaltungen:
- EP-A- 0 656 223
- DE-A- 4 030 084
- DE-B- 1 299 284
- DE-B- 1 486 812
- RU-C- 2 082 484

## Beschreibung

Die Erfindung betrifft einen Rückspülfilter insbesondere für die Wasserfilterung und ein Verfahren zum Rückspülen der Filter.

Der erfindungsgemäße Filter soll vorrangig für die Wasserfiltration in Bewässerungseinrichtungen eingesetzt werden. Bei der Erschließung von Trockengebieten und bei der Bewässerung landwirtschaftlicher Einrichtungen steht meist Wasser zur Verfügung, dessen Wasserqualität und insbesondere dessen Verschmutzungsgrad deutlich schlechter als Leitungswasser oder Regenwasser ist. Da eine solche Bewässerungsanlage häufig aus kilometerlangen Leitungen besteht, ist es für die Funktionstüchtigkeit der gesamten Bewässerungsanlage notwendig, das Wasser vor Einspeisen in das Leitungssystem zu filtern. Je nach Qualität des zu filternden Wassers bzw. zu filternden Mediums sind an den zur Wasserfilterung verwendeten Filter nicht nur hohe Anforderungen an die Filterleistungen zu stellen, sondern es ist auch wichtig, daß sich dieser Filter selbst reinigt. Die automatische Selbstreinigung der Filter oder Rückspülfilter ist besonders bedeutsam, wenn eine Vielzahl von Filtern in eine sich über eine ausgedehnte Fläche erstreckende Bewässerungsanlage eingebaut ist und es daher wirtschaftlich unzumutbar wäre, ständig die einzelnen in die Bewässerungsanlage eingebauten Filter zu überwachen und bei Überschreiten eines gewissen Verschmutzungsgrades durch Personal "von Hand" zu reinigen.

Die DE 39 32 229 zeigt einen Wasserfilter zum Auffangen grober Verunreinigungen insbesondere im Kühlwasser von Kraftwerken, der eine Rückspüleinrichtung aufweist. Diese besteht aus einem Sieb, das zentrisch und um eine Mittelachse drehbar in einer Leitung angeordnet ist und an seinem Umfangsrand einen Kranz Turbinenschaufeln aufweist. Auf der Zuströmseite des Siebes ist eine ortsfeste, das Sieb segmentweise abdeckende Rückspüleinrichtung befestigt, so daß das Sieb bei seiner Drehbewegung segmentweise an der Rückspüleinrichtung vorbeistreicht. Auf der Zuströmseite des Siebes anhaftende Verunreinigungen werden durch einen Rückspülstrom aus der Kühlleitung in eine Ablaßleitung überführt. Wegen des permanent in die Ablaßleitung abgeführten Spülstroms ist der auftretende Wasserverlust hoch, so daß ein derartiges sich selbst reinigendes Sieb nur in Kühlkreisläufen, nicht jedoch in Bewässerungsanlagen sinnvoll eingesetzt werden kann. Außerdem ist mit einem derartigen Filter eine Feinfilterung nicht möglich, da mit dem unmittelbar im Kühlrohr angeordneten Sieb nur grobe Verunreinigungen herausgefiltert werden können.

Weiterhin sind aus dem Stand der Technik die sogenannte Rückspülfilter bekannt, die bevorzugt zur Brennstoff- und Schmierölfiltration bei Maschinen verwendet werden. Bei diesen Rückspülfiltern werden die Filterelemente von Filterkerzen gebildet, die innerhalb eines Filtergehäuses kreisförmig um eine Filterachse herum angeordnet sind und mit ihren offenen Einströmenden an einer Lochplatte befestigt sind, so daß die zu reinigende Flüssigkeit in den Innenraum der Filterkerzen einströmt und ein Teilstrom dieser Flüssigkeit durch die Filterkerzenwände in einen Filtratraum gelangt und von dort dem Filterauslaß zugeführt wird. Sämtliche dieser bekannten Filtereinrichtungen weisen eine Reinigungseinrichtung auf, die mittels einer auf der Mittelachse des Filters angeordneten Drehwelle von Filterkerze zu Filterkerze gedreht wird, um die Schmutzpartikel, die sich an den Innenseiten der Filterkerzen ablagern, in eine Ablaßleitung abzuführen. Die Ablaßleitung ist mittels eines Ablaßventils wahlweise öffenbar oder verschließbar.

Ein solcher Rückspülfilter ist z.B. aus der DE 31 15 716 C2 bekannt. Im Betrieb eines derartigen Rückspülfilters kann zwischen zwei verschiedenen Betriebszuständen unterschieden werden. Im Filtrationsbetrieb werden diejenigen Filterkerzen, die nicht mit dem Spülglied gereinigt werden, von innen durchströmt und Filtrat tritt über die Umfangswände der Filterkerzen in eine Filtratkammer ein. Im Rückspülbetrieb, in dem die Filterkerzen gereinigt werden, befinden sich in Abhängigkeit von der Anzahl der Spülarme des Spülgliedes nur eine oder eine geringe Anzahl von Filterkerzen. Wenn das Spülglied das Einströmende der Filterkerze an der Lochplatte verschließt, und an den Filterkerzeninnenraum z.B. durch Öffnen des Ablaßventils Umgebungsdruck angelegt wird, sinkt der Druck in der oder den Filterkerzen ab und Filtrat strömt über die Außenwände der Filterkerze zurück in den Innenraum der Filterkerze, so daß an der Innenwand anhaftende Schmutzpartikel gelöst werden und über das Spülglied in eine Ablaßleitung überführt werden.

Ein ähnlicher Rückspülfilter ist aus der EP-0 656 233 B1 bekannt. Auch hier werden die Filterkerzen im Filtrierbetrieb von innen nach außen, im Rückspülbetrieb von außen nach innen durchströmt. Das Spülglied ist auf der Zulaufseite des ungefilterten Mediums in den Rückspülfilter angeordnet. Die Filterkerzen sind jedoch an beiden Enden offen, da die Filter zwischen zwei Lochringplatten angeordnet sind. Im Zentrum des Satzes von Filterkerzen ist ein eine Verbindungsleitung bildender Durchgang vorgesehen, damit die zu filternde Flüssigkeit von beiden Filterkerzenenden in die Filterkerzen eintreten kann. Die Filtratkammer und der Filterauslaß befinden sich entsprechend zwischen den Lochringplatten, der Filtergehäusewand und dem die Verbindungsleitung bildenden Rohr. Um das Druckniveau in der rückzuspülenden Filterkerze genau einstellen zu können, ist an dem dem Spülglied entgegenliegenden Einströmende der Filterkerze ein Drosselelement angeordnet, mit dem dieses Einströmende im Rückspülbetrieb teilweise abgedeckt wird. Der Vorteil hierbei ist, daß die Reinigung einerseits durch das in die Filterkerze zurückfließende Filtrat erfolgt, andererseits noch unfiltrierte Schmutzflüssigkeit in turbulenter Strömung im Querstrom zur Filtrierrichtung durch das Filterelement fließt. Die Effektivität ist hoch, der Verlust an gefilterter Flüssigkeit im Rückspülbetrieb ist niedrig.

Aus der DE-AS 1 299 284 ist ein Rückspülfilter mit im Filtergehäuse um eine Drehwelle konzentrisch angeordneten, rohrartigen an beiden Enden offenen und zwischen einer ersten und einer zweiten Lochplatte angeordneten Filterelementen, die im Filtrierbetrieb von beiden Einströmenden mit einem in den Rückspülfilter einströmenden ungefilterten Medium beaufschlagt sind, bekannt. Über die Drehwelle wird eine Reinigungseinrichtung angetrieben, die für jeden Filterkreis mit einem Ablaßventil in Verbindung stehende Spülglieder für die Einzel- oder Gruppenreinigung von Filterelementen im Rückspülbetrieb aufweist. Die Spülglieder sind jeweils paarweise für jeden Filterkreis, d.h. die auf einem konzentrischen Ring liegenden Filterelemente, angeordnet. Der Antrieb der Reinigungseinrichtung erfolgt über einen Getriebemotor unter Zuhilfenahme eines Reduktionsgetriebes. Wenn die Reinigung durch Rückspülung erfolgen soll, wird das Auslaßventil pneumatisch oder elektrisch betätigt. Im Rückspülbetrieb stehen mithin beide Einströmenden einer Filterkerze mit dem Paar zugehöriger Spülglieder und dem Ablaßventil in Verbindung, so daß die Rückspülung gleichzeitig gegensinnig erfolgt.

Ein Rückpülfilter gemäß dem Oberbegriff von Anspruch 1 ist aus der RU 2082484 bekannt. Bei diesem ist für ein zeitversetztes, gegensinniges Rückspülen das erste Spülglied in Drehrichtung versetzt zu dem zweiten Spülglied angeordnet und dem ersten und zweiten Spülglied ist am gegenüberliegenden Einströmende ein Verschlußglied zugeordnet. Das zeitversetzte, gegensinnige Rückspülen bewirkt eine bessere Reinigung der Filterelemente als im Stand der Technik. Ursache hierfür ist u.a., daß bei diesen Rückspülfiltern mit hoher Spülgeschwindigkeit zeitversetzt, wechselseitig rückgespült wird, so daß sowohl im Bereich der Einströmenden an den Lochplatten, als auch über einen großen Bereich der Höhe der Filterelemente die volle Intensität der Spülwirkung zum Tragen kommen kann.

Die Filtrierleistung und die Betriebssicherheit insbesondere des zuletztgenannten Filters ist zwar hoch. Es hat sich aber gezeigt, daß die bisher bekannten Rückspülfilter nicht wirtschaftlich sinnvoll bei der Wasserfilterung in Bewässerungsanlagen eingesetzt werden können.

Aufgabe der Erfindung ist es, einen Rückspülfilter zu schaffen, der sich bei hoher Filterleistung selbst reinigt, der wartungsarm ist und insbesondere für die Wasserfilterung geeignet ist.

Diese Aufgabe wird für einen Rückspülfilter durch die in Patentanspruch 1 angegebene Erfindung gelöst. Die Spülglieder sind mit in Drehrichtung vergrößerten Anschlußöffnungen bzw. die Kopfplatten mit vergrößerten Aussparungen versehen, so daß die Abmessungen der Anschlußöffnungen bzw. Aussparungen größer als die Abmessung der Verschlußglieder in Drehrichtung ist. Bei dieser Ausgestaltung schließt der Spülarm das eine Einströmende noch an das Ablaßventil an, während das Verschlußglied bereits das gegenüberliegende Einströmende spalt- oder sichelförmig für den Eintritt von Trübe freigibt. Hierdurch kann die Intensität im Rückspülen weiter gesteigert werden, da ein Abtransport der im Gegenstrom von den Wänden der Filterelemente gelösten Schmutzpartikel in turbulenter Strömung im Querstrom, d.h. quer zur Filtrierrichtung, erfolgt. Die an der Filterinnenwand anhaftenden Schmutzpartikel werden mithin effektiv im Querstrom mit turbulenter Strömung abtransportiert, so daß die Rückspülung weiter und tiefer in den Filterinnenraum hinein wirkt. Da sich Verschlußglied und Spülglied parallel zueinander bewegen, tritt die zusätzliche Rückspülung mit turbulenter Strömung im Querstrom jeweils zuerst an der in Drehrichtung liegenden Innenwand der Filterelemente und anschließend an der entgegengesetzt der Drehrichtung liegenden Innenwand der Filterelemente ein. Die Verbesserung der Intensität der Spülwirkung ist insbesondere bei Filtern für die Wasserfilterung von Vorteil, da einerseits vergleichsweise lange bzw. hohe Filterelemente eingesetzt werden können, andererseits die Wartungsintervalle erheblich reduziert sind oder entfallen können.

Bei einer bevorzugten Ausführungsform ist das erste Spülglied um 180° versetzt zu dem zweiten Spülglied angeordnet und es sind vorzugsweise auf einem Filterkreis eine ungerade Anzahl von Filterelementen angeordnet. Diese Anordnung bewirkt, daß zu einem Zeitpunkt, zu dem das erste Spülglied ein Filterelement auf dem Filterkreis rückspült, das andere Filterelement nicht über einem Einströmende eines Filterelementes, sondern über einer geschlossene Fläche der Lochplatte liegen kann, so daß der gesamte über das Ablaßventil aufbringbare Sog zur Rückspülung des einen Filterelementes zur Verfügung steht.

Ein konstruktiv einfacher Aufbau ergibt sich, wenn das erste Spülglied mit dem der ersten Lochplatte zugeordneten Verschlußglied einen ersten Spülarm und das zweite Spülglied mit dem der zweiten Lochplatte zugeordneten Verschlußglied einen zweiten Spülarm bildet. Die Spülarme können dann propellerartig über die beiden Lochplatten hinwegstreichen und Verschlußglied und Spülarm haben eine feste Zuordnung zueinander, so daß sie gleichmäßig zueinander bewegt werden. Für den Aufbau der Rückspülfilter ist es ferner vorteilhaft, wenn die Spülglieder und Verschlußglieder bzw. Spülarme drehfest an der Drehwelle anordbar sind. Es werden dann keine zusätzlichen Bauelemente benötigt, um den Gleichlauf von Spülglied und Verschlußglied zu gewährleisten.

Da bei der Filterung von Wasser u.a. abrasive Verunreinigungen wie Sandkörner aus dem Wasser auszufiltern sind, ist weiter von Vorteil, wenn die Verschlußglieder ggf. austauschbar an den Spülarmen befestigt sind und/oder für die Spülglieder innen ausgesparte Kopfplatten auswechselbar an den Spülarmen befestigt sind, wobei die Verschlußglieder und Kopfplatten als verschleißfeste Körper ausgebildet sein können und z.B. aus verschleißfestem Kunststoff mit Gleitbelag bestehen.

Für den Einsatz des Rückspülfilters in der Wasserfilterung kann von Vorteil sein, wenn die Strömungsrichtung des in den Filter einströmenden Mediums im Einlaßbereich des Rückspülfilters parallel zur Drehwellenachse ist. Diese Anordnung sorgt für eine günstige Bauform und für eine optimale Ausnutzung der Strömungsgeschwindigkeit des Wassers als zu filterndem Medium. Als Antrieb für die Drehwelle kann dann im Einlaßbereich des Rückspülfilters das Turbinenrad einer Axialturbine vorgesehen werden. Für die Wasserfilterung kann das Turbinenrad drehfest an der Drehwelle oder an dem einlaßseitigen Spülarm angeordnet sein, so daß bei dieser Ausgestaltung des Rückspülfilters kein Untersetzungsgetriebe zwischen dem Antriebsrad für die Rückspüleinrichtung und der Drehwelle der Rückspüleinrichtung vorgesehen ist, mithin die Herstellkosten des Rückspülfilters weiter reduziert sind. Insbesondere für den Einsatz als Wasserfilter bietet diese Ausgestaltung den Vorteil, daß im Rückspülfilter keine zu wartenden Getriebeelemente vorhanden sind. Während bei den in Maschinen eingesetzten Rückspülfiltern das zu filternde Öl gleichzeitig eine Schmierung sämtlicher sich drehenden Teile bewirkt, tritt dieser Effekt bei Wasser nicht auf. Die Funktionstüchtigkeit der automatischen Selbstreinigung des Rückspülfilters ohne Untersetzungsgetriebe, d.h. bei drehfester Anordnung des Turbinenrades auf der Drehwelle, wird durch die höhere Intensität der Spülwirkung ermöglicht. Bei der herkömmlichen Anordnung der Spülarme zueinander würde die für den Rückspülbetrieb zur Verfügung stehende Zeit nicht ausreichen, eine genügende Reinigung der Filterelemente zu erreichen, so daß sich der Rückspülfilter nach einiger Betriebszeit zugesetzt hätte und gewartet werden müßte. Dies muß aber gerade bei Rückspülfiltern, die in der Wasserfilterung eingesetzt werden sollen, vermieden werden. Für den Antrieb der Rückspüleinrichtung ist es günstig, wenn der Durchmesser des Turbinenrades gleich oder größer als der von den konzentrisch angeordneten Filterelementen gebildete Kreisringdurchmesser ist.

Die vorgenannte Anordnung der Turbine im Einlaßbereich des Rückspülfilters ist nur bei relativ sauberem, ausströmendem Wasser zweckmäßig. Beim Einsatz des Rückspülfilters in stark verunreinigtem Wasser ist es günstiger, wenn das Turbinenrad in Strömungsrichtung hinter den Filterelementen angeordnet ist, so daß auszufilternde Objekte wie Muscheln, Gras, Stoffetzen u.dgl. das Turbinenrad bzw. den Filtereinlaß nicht zusetzen oder blockieren können.

Alternativ zu der getriebelosen Ausführungsform kann zwischen Turbinenrad und Drehwelle auch ein vorzugsweise im Wasser laufendes Untersetzungsgetriebe angeordnet sein. Das Untersetzungsgetriebe kann ein Untersetzungsverhältnis von etwa 1:30 bis 1:80 aufweisen, um die Drehzahl der Reini-gungseinrichtung zu reduzieren. Vorzugsweise wird die Drehzahl mittels des Untersetzungsgetriebes auf einen Maximalwert von etwa 10 ¹/min. begrenzt.

Alternativ zu einem Turbinenrad kann die Drehwelle mit einer Antriebseinheit aus Elektromotor und/oder Getriebe gekoppelt sein. Wie weiter oben dargelegt, sind das Getriebe und die Antriebseinheit hierzu in einem gegenüber dem Filterinnenraum abgedichteten Bereich angeordnet, wobei z.B. nur eine Abtriebswelle der Antriebs-einheit in das Filtergehäuse hineingeführt ist. Ferner kann das Ablaßventil elektrisch oder hydraulisch betätigbar sein und/oder das Ablaßventil ist mittels einer Steuereinrichtung betätigbar, die mit einer den Differenzdruck im Rückspülfilter messenden Meßeinrichtung versehen ist, wie an sich bei Rückspülfiltern aus dem Stand der Technik bekannt. Zur hydraulischen Betätigung des Ablaßventils kann eine Zahnradpumpe im Strömungsweg angeordnet sein.

Eine besondere Ausgestaltung eines Rückspülfilters für die Wasserfilterung kann darin bestehen, die Energie zur Betätigung der Antriebseinheit, Steuereinheit und/oder des Ablaßventils über Solar, insbesondere mittels eines Solarpaneels od.dgl. zu gewinnen. Hierzu sind dann die Antriebseinheit, die Steuereinheit und das Ablaßventil vorzugsweise für Niederspannungen ausgelegt. Die Verwendung von Niederspannungsmodulen zusammen mit einem Solarpaneel bei Rückspülfiltern kann hierbei von eigenständiger erfinderischer Bedeutung sein, ohne daß es auf die erfindungsgemäße Anordnung von Verschlußglied und Rückspülglied ankommt, auch wenn die Kombination eine besonders vorteilhafte Ausgestaltung darstellt. Der Rückspülfilter ist vorzugsweise ein Bewässerungsfilter.

Die eingangs genannte Aufgabe wird erfindungsgemäß auch durch das in Anspruch 16 angegebene Verfahren gelöst. Bei diesem Verfahren zum Rückspülen von Filtern, insbesondere für die Wasserfilterung, die in einem Filtergehäuse konzentrisch um eine Drehwelle angeordnete, an beiden Einströmenden offene Filterelemente aufweisen, werden im Filtrierbetrieb beide Enden der Filterelemente mit ungefiltertem Medium beaufschlagt, das in das Gehäuse einströmt und die Filterelemente von innen nach außen durchströmt, während im Rückspülbetrieb die Filterelemente für deren Einzel- oder Gruppenreinigung über Spülglieder einer Reinigungseinrichtung an ein Ablaßventil angeschlossen werden, so daß Filtrat die Filterelemente im Gegenstrom von außen nach innen durchströmt. Im Rückspülbetrieb werden die Filterelemente zeitversetzt und gegensinnig rückgespült, indem zuerst mit einem ersten Spülglied und einem diesem bzw. dem gegenüberliegenden Einströmende desselben Filterelementes zugeordneten Verschlußglied ein Filterelement in einer Richtung rückgespült wird und später das gegenüberliegende Ende desselben Filterelementes mit einem in Drehrichtung versetzt zum ersten Spülglied angeordneten zweiten Spülglied und diesem zugeordneten Verschlußglied in entgegenge-setzter Richtung rückgespült wird. Erfindungsgemäß werden beim zeitversetzten gegensinnigen Rückspülen die Verschlußglieder das Einströmende zeitweise spalt- oder sichelförmig freigeben, während mit dem diesem Verschlußglied zugeordneten Spülglied das gegenüberliegende Einströmende vollständig an das geöffnete Ablaßventil angeschlossen wird, so daß ungefiltertes Medium die Rückstände im Querstrom zum Ablaßventil transportieren kann.

Weitere vorteilhafte Ausgestaltungen des erfindungsgemäßen Rückspülfilters ergeben sich aus den Unteransprüchen sowie aus der nachfolgenden Beschreibung der in der Zeichnung wiedergegebenen, nur der Illustration des Erfindungsgedankens dienenden Ausführungsbeispiele eines erfindungsgemäßen Rückspülfilters für die Wasserfiltration. In der Zeichnung zeigen:
- **Fig. 1**: schematisch eine Seitenansicht, teilweise aufgebrochen, eines erfindungsgemäßen Rückspülfilters für die Wasserfiltration;
- **Fig. 2**: eine Draufsicht auf die in Fig. 1 untere Lochplatte;
- **Fig. 3**: eine Schnittansicht der Lochplatte aus Fig. 2 entlang III-III;
- **Fig. 4**: einen Schnitt durch die in Fig. 1 obere Lochplatte;
- Fig. 5: einen Spülarm in Schnittansicht gem. Fig. 1; und
- Fig. 6: eine Draufsicht auf den Spülarm aus Fig. 5.

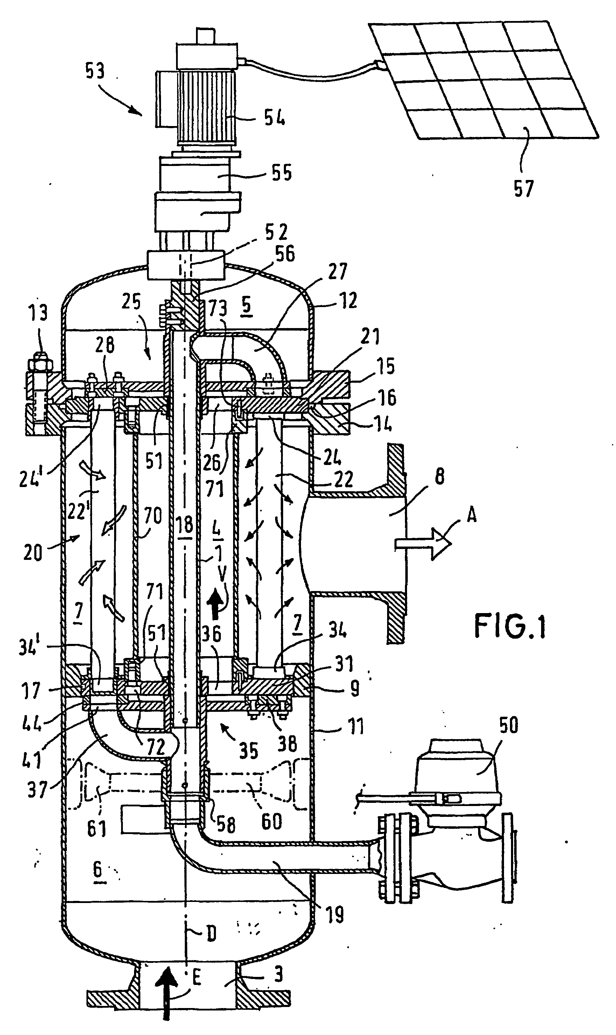

In der Zeichnung ist mit 10 ein insbesondere als Bewässerungsfilter geeigneter Rückspülfilter mit einem etwa zylindrischen Filtergehäuse 11 dargestellt, das an seiner Oberseite mit einem Gehäusedeckel 12 verschließbar ist. Zur Befestigung des Gehäusedeckels 12 an dem Filtergehäuse 11 dienen umfangsverteilt angeordnete Schrauben 13, die einen an der Oberseite des Filtergehäuses 11 ausgebildeten Ringflansch 14 und einen an der Unterseite des Gehäusedeckels 12 ausgebildeten Ringflansch 15 durchgreifen. Die beiden Ringflansche 14, 15 weisen filtergehäuseinnenseitig jeweils einen Absatz zur Aufnahme der oberen Lochplatte 21 eines insgesamt mit 20 bezeichneten Filtersatzes bei zusammengesetztem Filtergehäuse auf. Der Filtersatz 20 umfaßt mehrere konzentrisch um die im Zentrum des Filtergehäuses 11 angeordnete Drehwelle 1 angeordnete Filterelemente 22, von denen in der Fig. 1 nur zwei Filterelemente 22, 22' dargestellt sind. Um einen Filtersatz 20 auszubilden, sind die Filterelemente 22 fest zwischen der oberen Lochplatte 21 und einer unteren Lochplatte 31 eingespannt. Ein Rohreinsatz 70 ist über Befestigungsringe 71 zwischen den Lochplatten 21, 31 angeordnet. Die Befestigungsringe 71 sind an den Lochplatten 21, 31 über Befestigungsschrauben 72 und Zentrierstifte 73 festgelegt.

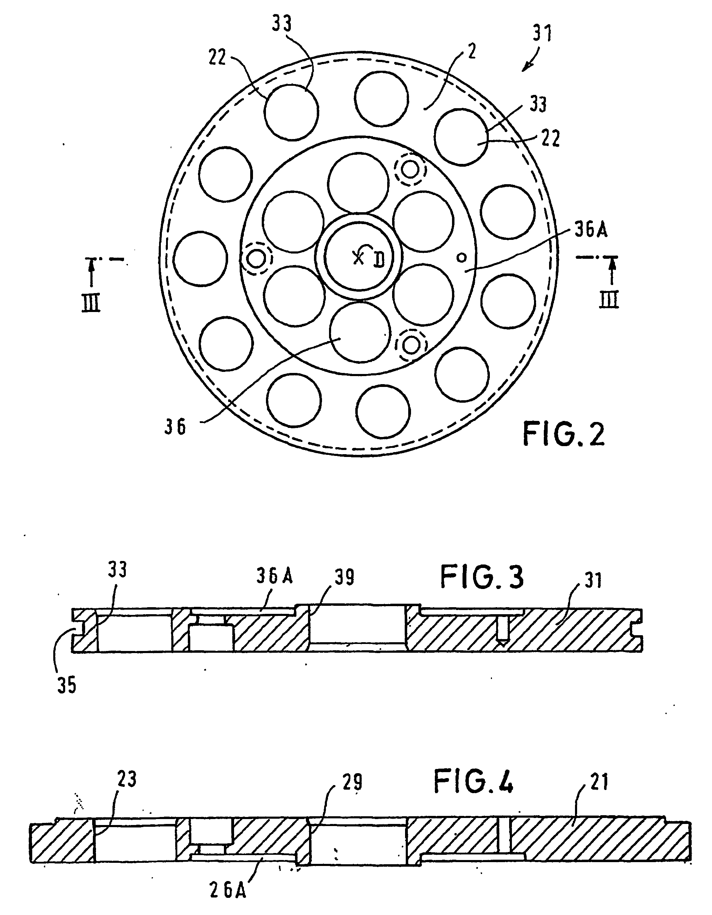

Fig. 2 zeigt eine Draufsicht auf die untere Lochplatte 31. An der Lochplatte 31 ist gut zu erkennen, daß im gezeigten Ausführungsbeispiel insgesamt elf Filterelemente 22 auf einem gemeinsamen, konzentrischen Filterkreis 2 angeordnet sind. Das Vorsehen einer ungeraden Anzahl von Filterelementen 22 ermöglicht, daß die Lochplatte 31 bzw. 21 an einem Abschnitt der zu einem bestimmten Filterelement 22 um einen Winkel von 180° versetzt ist, gerade keine Öffnung hat, wie auch aus der Schnittansicht in Fig. 3 deutlich wird

Im Filtrierbetrieb wird der Rückspülfilter 10 z.B. durch Wasser als zu filterndem Medium durchströmt, das parallel zu den Filterelementen 22 und der Achse D der Drehwelle 1 durch einen Rückspülfiltereinlaß 3 am unteren Ende des Filtergehäuses 11 in den Rückspülfilter 10 eintritt (schwarzer Pfeil E). Das zu filternde Medium, im folgenden Trübe genannt, tritt im Filtrierbetrieb dann einerseits durch Einströmlöcher 33 (Fig. 3) in der unteren Lochplatte 31 in die unteren Einströmenden 34 der Filterelemente 22 ein, andererseits durch die vom Rohreinsatz 70 gebildete Verbindungsleitung 4, wie mit dem Pfeil V für die Trübe dargestellt, in den Deckelinnenraum 5 im Gehäusedeckel 12 über und strömt von dort durch Einströmlöcher 23 (Fig. 4) in der oberen Lochplatte 21 in die oberen Einströmenden 24 der Filterelemente 22 ein. Für den Trübeübertritt durch die vom Rohreinsatz 70 gebildete Verbindungsleitung 4 sind in den Lochplatten 21, 31, wie die Fig. 1 und 2 zeigen, runde Durchtrittsöffnungen 26, 36 konzentrisch um die Drehachse D angeordnet. Die Durchtrittsöffnungen 26, 36 sind jeweils an den einander zugewandten Seiten der Lochplatten 21, 31 über Ringkanäle 26A, 36A (Fig. 3, 4) miteinander verbunden. Die Filterelemente 22 werden mithin von beiden Einströmenden 24, 34 im Filtrierbetrieb mit Trübe beaufschlagt, das durch die Wände der Filterelemente 22 von innen nach außen hindurchtritt, wie in Fig. 1 schematisch an der rechten Filterkerze dargestellt ist. Das hierdurch entstehende, nicht gezeigte Filtrat befindet sich anschließend in einer etwa ringförmigen Filtratkammer 7, aus der es durch den Filtratauslaß 8 z.B. in ein Bewässerungssystem zurückgeführt werden kann, wie mit dem weißen Pfeil A für das Filtrat dargestellt. Der Auslaß 8 ist etwa mittig zwischen den beiden Lochplatten 21, 31 angeordnet und die Filtratkammer 7 ist gegenüber von der Trübe durchströmten Bereichen im Rückspülfilter 10, insbesondere dem Gehäusedeckelinnenraum 5, der einlaßseitigen Trübekammer 6 und der Verbindungsleitung 4 abgedichtet. Die Abdichtung an der oberen Lochplatte 21 erfolgt dabei durch deren flüssigkeitsdichten Einsatz zwischen die Ringflansche 14, 15 mittels des Dichtrings 16. Die untere Lochplatte 31, die, wie insbesondere auch die Fig. 2 und 3 zeigen, einen geringeren Durchmesser als die Lochplatte 21 hat, ist mittels einer in einer umlaufenden, stirnseitigen Dichtungsnut 35 eingesetzten Dichtung 17 in einen Dichtsteg 9 an der Innenseite des Filtergehäuses 11 von oben eingesetzt.

Da die Trübe über beide Einströmenden 24, 34 in die Filterelemente 22 eintreten kann, ist die Filtrierleistung des Rückspülfilters hoch. Der aus der Trübe ausgefilterte Schmutz bleibt zwischen den Lochplatten 21, 31 an den Innenwänden der Filterelemente 22 haften. Der Verschmutzungsgrad der Filterelemente nimmt mit der Filtrierzeit zu. Zur Reinigung der Filterelemente ist daher eine Rückspüleinrichtung vorgesehen, die im folgenden erläutert werden wird.

Die Rückspüleinrichtung zum Reinigen einzelner, ggf. auch Gruppen von Filterelementen 22' weist einen ersten, oberen, insgesamt mit 25 bezeichneten Spülarm und einen zweiten, unteren, insgesamt mit 35 bezeichneten Spülarm auf. Die Spülarme 25, 35 sind identisch zueinander ausgebildet und jeweils drehfest an der als Hohlwelle ausgebildeten, den Filteransatz 20 zentral durchgreifenden Drehwelle 1 befestigt. Jeder Spülarm 25, 35 weist jeweils ein über die Schmutzleitung 18 in der Hohlwelle 1 und eine Abzugsleitung 19 an ein schaltbares Ablaßventil 50 angeschlossenes Spülglied 27, 37 sowie ein Verschlußglied 28, 38 auf. Das erste Spülglied 27 ist um 180° versetzt zu dem zweiten Spülglied 37 angeordnet. Das Verschlußglied 28 liegt dem Spülglied 37, das Verschlußglied 38 dem Spülglied 27 mittig gegenüber, so daß die einander zugeordneten Glieder 28, 37 der Reinigungseinrichtung an demselben Filterelement 22' wirksam sind.

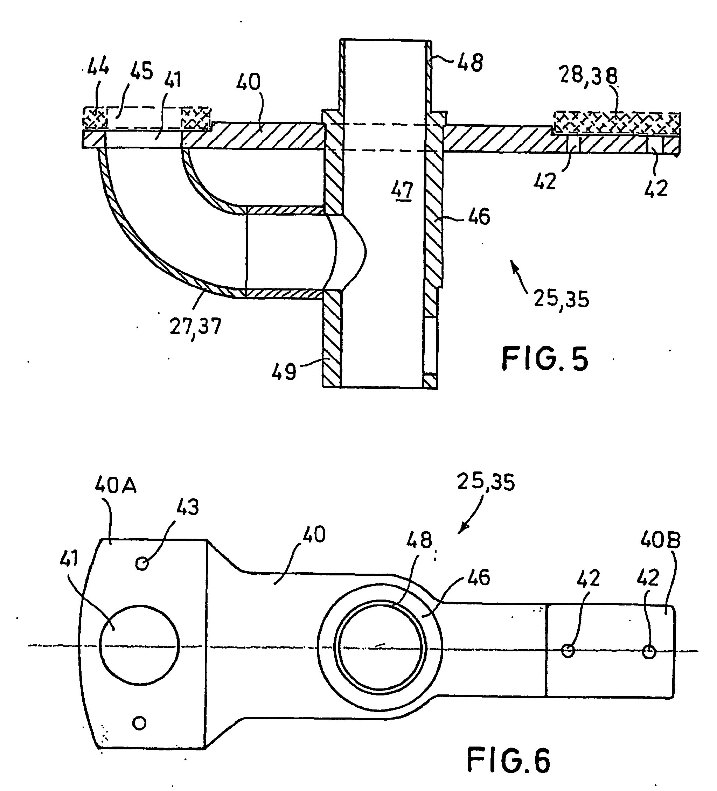

Die Fig. 5 und 6 zeigen die Spülarme 25, 35 im Detail. Sie wissen jeweils einen Dreharm 40 auf, an dessen in den Fig. 5 und 6 linken Armende 40A eine mit dem hohlen Spülglied 27, 37 kommunizierende Anschlußöffnung 41 ausgebildet ist und an dessen anderen, in den Fig. 5 und 6 rechten Armende 40B Gewindebohrungen 42 zur auswechselbaren Befestigung der Verschlußglieder 28, 38 ausgebildet sind. Die Verschlußglieder 28, 38 bestehen vorzugsweise aus verschleißfestem Kunststoff ggf. mit Gleitbelag und sind plattenförmig oder scheibenförmig ausgebildet, wobei sie die Einströmenden 24, 34 gerade vollständig abdichten können. An den Dreharmen 40 sind vor den Anschlußöffnungen 41 mit Aussparungen 45 versehene Kopfplatten 44 vorzugsweise aus verschleißfestem Kunststoff mit Gleitbelag befestigt, so daß sich sowohl die Anschlußöffnungen 41 mittels der Kopfplatten 44 als auch die Verschlußglieder 28, 38 abdichtend gegen die Lochplatten 21, 31 anlegen bzw. über diese rotatorisch hinwegbewegt werden können. Das Armende 40A mit den Anschlußöffnungen 41 und Gewindebohrungen 43 zur austauschbaren Befestigung der Kopfplatten 44 ist etwa doppelt so breit wie das Armende 40 B, so daß die Aussparung in der Kopfplatte 44 in Drehrichtung vergrößert bzw. gestreckt werden kann. Die Spülglieder 27, 37 sind anderenendes an eine Zentralhülse 46 angeschlossen, die den Spülarm 40 mittig durchgreift. In den Hohlabschnitt 47 der Zentralhülse 46 ist jeweils durch das abgedrehte Lagersitzende 48 hindurch die Drehwelle 1 (Fig. 1) eingesteckt, so daß ein Verbindungsanschluß zwischen Anschlußöffnung 41 und Schmutzleitung 18 in der Drehwelle 1 entsteht. Die Lagersitzenden 48 werden mittels Nadellagern 51 od.dgl. in Lagerbohrungen 29, 39 (Fig. 3 und 4) in den Lochplatten (21, 31) gelagert, so daß sich die Drehwelle 1 zusammen mit den Spülarmen 25, 35 drehen kann. Das in Fig. 5 untere Hülsende 49 ist beim unteren Spülarm 35 über eine Drehhülsenverbindung 58 (Fig. 1) an die Abzugsleitung 19 angeschlossen, beim oberen Spülarm 25 mit dem geschlossenen Drehwellenende 56 (Fig. 1) der Drehwelle 1 drehfest verschraubt.

In der Fig. 1 befindet sich das linke Filterelement 22' im Rückspülbetrieb. Die Anschlußöffnung 41 des Spülglieds 37 des unteren Spülarms 35 ist über die Aussparung 45 in der Kopfplatte 44 an das untere Einströmende 34' des Filterelementes 22' angeschlossen. Das obere Einströmende 24' ist in der in Fig. 1 gezeigten Stellung der Spülarme 25, 35 gerade durch das Verschlußglied 28 am Spülarm 25 verschlossen. Durch Öffnen des Ablaßventils 50 wird über die Schmutzleitung 19 und das Spülglied 37 Umgebungsdruck an den Innenraum des im Rückspülbetrieb befindlichen Filterelementes 22' angelegt. Hierdurch treten geringe Mengen des Filtrats aus der Filtratkammer 7 von außen nach innen in den Innenraum des Filterelementes 22' ein, wie mit den weißen Pfeilen gezeigt, wodurch die an den Innenwänden anhaftenden Schmutzpartikel gelöst und über den Spülarm 37 und die Abzugsleitung 19 aus dem Filterelementinnenraum abtransportiert werden. Da der Spülarm 37 am unteren Einströmende 34' vorbeigleitet, ist die Reinigungswirkung in der in Fig. 1 gezeigten Stellung in den sich an das untere Einströmende 34' anschließenden Bereichen deutlich höher als an oder nahe des oberen verschlossenen Einströmendes 24', so daß während dieses ersten Spülvorgangs des Filterelemtes 22' insbesondere eine intensive Reinigung in der unteren Hälfte des Filterelementes 22' erzielt wird. Die Spülwirkung im Gegenstrom, d.h. durch das Filtrat von außen nach innen, wird unterstützt von einem Spülstrom im Querstrom, d.h. in Axialrichtung der Filterelemente, der sich als turbulente Strömung zu Zeitpunkten im Rückspülbetrieb auswirkt, an dem mit dem Verschlußglied 28 das obere Einströmende 24' nicht vollständig geschlossen ist, sondern spalt- oder sichelförmig offen bleibt. Die Intensität der Spülwirkung im Gegenstrom ist dabei jeweils an oder nahe des Verschlußgliedes 28 am stärksten und nimmt über die Höhe des Filterelementes 22' zum Spülglied 37 hin ab.

Durch den erfindungsgemäßen Aufbau des Rückspülfilters mit dem zusätzlichen oberen, für das gegensinnige, zeitversetzte Rückspülen vorgese-henen Spülglied 27 und entsprechend zugeordnetem Verschlußglied 38 am gegenüberliegenden unteren Spülarm 35 wird nun das Filterelement 22' zu einem späteren Zeitpunkt in entgegengesetzter Richtung rückgespült, im gezeigten Ausführungsbeispiel nach einer 180°-Drehung der gesamten Spüleinrichtung. Dieser Zustand ist zwar nicht dargestellt, es ist jedoch für den Fachmann ersichtlich, daß dann das Spülglied 27 des oberen Spülarmes 25 an das obere Einströmende 24' des in Fig. 1 linken Filterelementes 22' angeschlossen wäre und das Verschlußglied 38 entsprechend das untere Einströmende 34' des Filterelementes 22' verschließen würde. Dieses zeitversetzte, gegensinnige Rückspülen sorgt insgesamt für eine höhere Intensität der Spülwirkung und damit für eine lange, wartungsfreie Funktionstüchtigkeit des erfindungsgemäßen Rückspülfilters, was insbesondere für die Wasserfiltration erforderlich ist.

In der in Fig. 1 gezeigten Stellung der Spülarme 25, 35 ist die Anschlußöffnung des Spülglieds 27 des oberen Spülarms 25 durch die Lochplatte 21 verschlossen, wie in Fig. 1 gut zu erkennen ist. Der über die Abzugleitung 19 aufgebrachte Umgebungsdruck liegt daher ausschließlich an dem im Rückspülbetrieb befindlichen Filterelement 22' an.

Aus der vorhergehenden Beschreibung ist deutlich geworden, daß zur Rückspülung sämtlicher auf dem Filterkreis 2 liegender Filterelemente 22 die Spülarme 25, 35 gedreht werden müssen. Die Antriebsenergie für die Drehbewegung der Spülarme 25, 35 kann bei einer ersten Ausführungsform mit der Antriebseinheit 53 erzeugt werden, die einen Motor 54 und ein Getriebe 55 umfaßt, deren Abtriebswelle 52 durch den Gehäusedeckel 12 hindurchgeführt und drehfest mit dem oberen, verschlossenen Drehwellenende 56 der Drehwelle 1 verbunden ist. Von der Antriebseinheit kommt also nur die Abtriebswelle 52 mit Wasser in Berührung, so daß durch das Wasser keine Schädigung der Antriebseinheit 53 entstehen kann. Für die Wasserfiltration insbesondere in Bewässerungssystemen in Wüstenregionen ist die Antriebseinheit 53 dabei derart ausgelegt, daß der benötigte Strom mittels einer schematisch dargestellten Solarpanels 57 gewonnen wird. Die Antriebseinheit kann hierzu für den Niederspannungsbetrieb z.B. mit 12 Volt oder 24 Volt ausgelegt sein. Auch das Ablaßventil 50 sollte dann entsprechend für den Niederspannungsbetrieb ausgelegt sein, so daß mit dem Solarpanel 57 die Energie für sämtliche elektrischen Komponenten gewonnen werden kann.

Alternativ kann auf eine elektrische Antriebseinheit und ein Getriebe vollständig verzichtet werden und die Drehung der Drehwelle 1 mitsamt der Spülarme 25, 35 wird mittels eines Turbinenrades 60 erzeugt, das in der einlaßseitigen Trübekammer 6 angeordnet ist. Mit dem Turbinenrad 60 wird die Reinigungseinrichtung permanent gedreht, so daß für den Rückspülbetrieb nur eine äußerst kurze Zeit zur Verfügung steht; aufgrund der erfindungsgemäßen zeitversetzten, äußerst effektiven Reinigung der Filterelemente wird, trotz der kurzen zur Verfügung stehenden Zeit, eine ausreichende Reinigung der Filterelemente erzielt. Um die Drehzahl der Drehwelle möglichst niedrig zu halten, empfiehlt es sich, daß sich das Turbinenrad 60 nahezu über die gesamte Breite des Turbinengehäuses 11 erstreckt und die Turbinenschaufeln 61 einen Kreisring überstreifen, der größer als der Filterkreis 2 der Filterelemente 22 ist.

Die Erfindung ist nicht auf das beschriebene Ausführungsbeispiel beschränkt. So kann die Anzahl der Filterelemente variiert werden und es können mehrere Kreisringe mit Filterelementen und jeweils jedem Kreisring zugeordnetem Spülarm vorgesehen sein. Die Spülarme können, wie in den Fig. 5 und 6 gezeigt, aus Einzelteilen zusammengesetzt sein, können aber auch einstückig z.B. als Gußteile ausgebildet werden. Anstelle separater Verschlußglieder 28, 38 und Kopfplatten 44 können diese auch einstückig an den Spülarmen ausgebildet werden. Der Rückspülfilter kann auch horizontal eingesetzt werden und/oder die Einströmrichtung kann senkrecht oder winklig zu der Ausrichtung der Filterelemente erfolgen. Außerdem ist es nicht unbedingt erforderlich, daß das Verschlußglied und das Spülglied eines Spülarms um 180° versetzt zueinander angeordnet sind. Diese Ausgestaltung bietet zwar für den gleichmäßigen Lauf der Spülarme Vorteile, die Spülarme könnten jedoch auch mit zueinander gekröpft angeordneten Hälften oder segmentartig ausgebildet sind, so daß Spül- und Verschlußglied unmittelbar nebeneinander liegen. Ferner kann die Aussparung in den Kopfplatten in Drehrichtung gestreckt ausgebildet sein, so daß der Spülarm noch das jeweilige Einströmende überdeckt, während das Verschlußglied bereits einen Spalt am gegenüberliegenden Einströmende freigegeben hat oder noch nicht vollständig seine Verschlußstellung angenommen hat. Diese und weitere Änderungen sollen in den Schutzbereich der Schutzansprüche fallen.

## Patentansprüche

1. Rückspülfilter insbesondere für die Wasserfilterung, mit im Filtergehäuse um eine Drehwelle konzentrisch angeordneten, an beiden Einströmenden offenen und zwischen einer ersten und einer zweiten Lochplatte angeordneten Filterelementen, die im Filtrierbetrieb von beiden Enden mit einem in den Rückspülfilter einströmenden ungefilterten Medium beaufschlagt sind, und mit einer über die Drehwelle antreibbaren Reinigungseinrichtung, die für jeden Filterkreis ein mit einem Ablaßventil in Verbindung stehendes erstes, der ersten Lochplatte zugeordnetes Spülglied und ein zweites, der zweiten Lochplatte zugeordnetes Spülglied für die Einzel- oder Gruppenreinigung von Filterelementen im Rückspülbetrieb aufweist, wobei jedes Spülglied eine Anschlußöffnung zum Anschluß des Ablaßventils an ein Einströmende der Filterelemente aufweist und für ein zeitversetztes, gegensinniges Rückspülen das erste Spülglied (27) in Drehrichtung versetzt zu dem zweiten Spülglied (37) angeordnet ist und dem ersten und zweiten Spülglied (27; 37) am gegenüberliegenden Einströmende ein Verschlußglied (38; 28) zugeordnet ist, **dadurch gekennzeichnet, daß** die Abmessungen der Anschlußöffnungen (41) und/oder die Abmessungen der Aussparungen (45) von den Spülgliedern (27, 37) zugeordneten, innen ausgesparten Kopfplatten (44) größer sind als die Abmessungen der Verschlußglieder (38, 28), um im Rückspülbetrieb die Rückspülung der Wände der Filterelemente (22) im Gegenstrom durch einen Querstrom zu unterstützen.

2. Rückspülfilter nach Anspruch 1, **dadurch gekennzeichnet, daß** das erste Spülglied (27) um 180° versetzt zu dem zweiten Spülglied (37) angeordnet ist und vorzugsweise auf einem Filterkreis (2) eine ungerade Anzahl von Filterelementen (22) angeordnet sind.

3. Rückspülfilter nach Anspruch 1 oder 2, **dadurch gekennzeichnet, daß** das erste Spülglied (27) mit dem der ersten Lochplatte (21) zugeordneten Verschlußglied (38) einen ersten Spülarm (25) und das zweite Spülglied (37) mit dem der zweiten Lochplatte (31) zugeordneten Verschlußglied (38) einen zweiten Spülarm (35) bildet.

4. Rückspülfilter nach einem der Ansprüche 1 bis 3, **dadurch gekennzeichnet, daß** die Spülglieder (27; 37) und Verschlußglieder (28; 38) bzw. Spülarme (25; 35) drehfest an der Drehwelle (1) anordbar sind.

5. Rückspülfilter nach einem der Ansprüche 1 bis 4, **dadurch gekennzeichnet, daß** die Verschlußglieder (28; 38) austauschbar an den Spülarmen befestigt sind und/oder die innen ausgesparten Kopfplatten (44) an den Spülarmen (25; 35) auswechselbar befestigt sind.

6. Rückspülfilter nach einem der Ansprüche 1 bis 5, **dadurch gekennzeichnet, daß** die Verschlußglieder (28; 38) und Kopfplatten (44) aus verschleißfestem Kunststoff bestehen.

7. Rückspülfilter nach einem der Ansprüche 1 bis 6, **dadurch gekennzeichnet, daß** die Strömungsrichtung (E) des in den Filter einströmenden Mediums im Einlaßbereich des Rückspülfilters (10) parallel zur Drehwellenachse (D) ist.

8. Rückspülfilter nach einem der Ansprüche 1 bis 7, **dadurch gekennzeichnet, daß** als Antrieb für die Drehwelle (1) ein Turbinenrad (60) vorgesehen ist.

9. Rückspülfilter nach Anspruch 8, **dadurch gekennzeichnet, daß** das Turbinenrad (60) in der einlaßseitigen Tübekammer (6) des Rückspülfilters (10) und/oder drehfest an der Drehwelle (1) oder an dem einlaßseitigen Spülarm (35) angeordnet ist, wobei vorzugsweise der Durchmesser des Turbinenrades (60) gleich oder größer als der Filterkreis (2) der konzentrisch angeordneten Filterelemente (22) ist.

10. Rückspülfilter nach einem der Ansprüche 1 bis 7, **dadurch gekennzeichnet, daß** das Turbinenrad in Strömungsrichtung hinter den Filterelementen angeordnet ist.

11. Rückspülfilter nach Anspruch 8 oder 10, **dadurch gekennzeichnet, daß** zwischen Turbinenrad und Drehwelle ein vorzugsweise im Medium bzw. Wasser laufendes Untersetzungsgetriebe angeordnet ist, das die Drehgeschwindigkeit der Drehwelle bzw. Spülarme vorzugsweise auf einen Maximalwert von etwa 10 ¹/min. begrenzt und/oder ein Untersetzungsverhältnis von 1:30 bis 1:80 hat.

12. Rückspülfilter nach einem der Ansprüche 1 bis 7, **dadurch gekennzeichnet, daß** die Drehwelle (1) mit einer Antriebseinheit (53) aus Elektromotor (54) und/oder Getriebe (55) gekoppelt ist, von denen vorzugsweise nur die Abtriebswelle (52) in den Innenraum des Filtergehäuses hineinragt.

13. Rückspülfilter nach einem der Ansprüche 1 bis 12, **dadurch gekennzeichnet, daß** das Ablaßventil (50) elektrisch oder hydraulisch betätigbar ist und/oder mittels einer Steuereinrichtung betätigbar ist, die mit einer den Differenzdruck im Rückspülfilter messenden Meßeinrichtung versehen ist.

14. Rückspülfilter nach Anspruch 12 oder 13, **dadurch gekennzeichnet, daß** die Energie zur Betätigung der Antriebseinheit (53) Steuereinheit und/oder des Ablaßventils (50) mittels eines Solarpanels (57) od.dgl. gewonnen wird.

15. Rückspülfilter nach einem der Ansprüche 1 bis 14, **dadurch gekennzeichnet, daß** der Rückspülfilter ein Bewässerungsfilter ist.

16. Verfahren zum Rückspülen von Filtern insbesondere für die Wasserfilterung, die in einem Filtergehäuse (11; 12) konzentrisch um eine Drehwelle (1) angeordnete, an beiden Einströmenden (24; 34) offene Filterelemente (22) aufweisen, wobei im Filtrierbetrieb beide Enden (24; 34) der Filterelemente (22) mit ungefiltertem Medium beaufschlagt werden, das in das Gehäuse (11, 12) einströmt und die Filterelemente (22) von innen nach außen durchströmt, und wobei im Rückspülbetrieb die Filterelemente (22) für deren Einzel- oder Gruppenreinigung über Spülglieder (27; 37) einer Reinigungseinrichtung an ein Ablaßventil (60) angeschlossen werden, so daß Filtrat die Filterelemente (22') im Gegenstrom von außen nach innen durchströmt, wobei im Rückspülbetrieb die Filterelemente (22') zeitversetzt und gegensinnig rückgespült werden, indem zuerst mit einem ersten Spülglied (27) und einem dem gegenüberliegenden Ende desselben Filterelementes (22') zugeordneten Verschlußglied (38) in einer Richtung rückgespült wird und später am ande-ren Ende (34') mit einem in Drehrichtung versetzt zum ersten Spülglied (27) angeordneten zweiten Spülglied (37) und diesem zugeordneten Verschlußglied (28) in entgegengesetzter Richtung rückgespült wird, **dadurch gekennzeichnet, daß** beim gegensinnigen Rückspülen die Verschlußglieder (28; 38) das Einströmende (24'; 34') vor und/oder nach dem Verschließen zeitweise spalt- oder sichelförmig freigeben, während mit dem Spülglied (27; 37) das gegenüberliegende Einströmende ( 34'; 24') vollständig an das geöffnete Ablaßventil (60) angeschlossen wird, wodurch die Rückspülung der Wände der Filterelemente (22) im Gegenstrom durch einen Querstrom unterstützt wird.

## Claims

1. Backflush filter, in particular for water filtration, with filter elements arranged in the filter housing around a rotary shaft in a concentric manner, open at both inflow ends and arranged between a first and a second perforated plate, which filter elements are charged during the filtration operation from both ends with an unfiltered medium flowing into the backflush filter, and with a cleaning device which can be driven via the rotary shaft, which comprises, for each filter circuit, a first flushing member assigned to the first perforated plate, and a second flushing member assigned to the second perforated plate, the flushing members being in connection with an outlet valve for the individual or group cleaning of filter elements in a backflush operation, whereby every flushing member comprises a connection opening for the connection of the outlet valve to an inflow end of the filter elements and, for a delayed counter-flow backflush, the first flushing member (27) is arranged offset to the second flushing member (37) in the rotary direction, and a sealing member (38; 28) is assigned to the first and second flushing members (27; 37) thereto at the opposite inflow end, **characterised in that** the measurements of the supply openings (41) and/or the measurements of the recesses (45) of inwardly recessed head plates (44) assigned to the flushing members (27, 37) are larger than the measurements of the sealing members (38, 28), so as to support the backflushing of the walls of the filter elements (22) in the counter flow by means of a cross-flow in the blackflush operation.

2. Backflush filter according to claim 1, **characterised in that** the first flushing member (27) is arranged with an offset of 180° to the second flushing member (37) and preferably an uneven number of filter elements is arranged on a filter circuit (2).

3. Backflush filter according to claim 1 or 2, **characterised in that** the first flushing member forms a first flushing arm (25) with the sealing member (28) assigned to the first perforated plate (21) and the second flushing member (37) forms a second flushing arm (35) with the sealing member (38) assigned to the second perforated plate (31).

4. Backflush filter according to one of claims 1 to 3, **characterised in that** the flushing members (27; 37) and sealing members (28; 38) or flushing arms (25; 35) can be arranged at the rotary shaft (1) in a torque-proof manner.

5. Backflush filter according to one of claims 1 to 4, **characterised in that** the sealing members (28; 38) are secured to the flushing arms in an exchangeable manner and/or the inwardly recessed head plates (44) are secured to the flushing arms (25; 35) in an exchangeable manner.

6. Backflush filter according to one of claims 1 to 5, **characterised in that** the sealing members (28, 38) and the head plates (44) consist of wear-resistant plastics.

7. Backflush filter according to one of claims 1 to 6, **characterised in that** the flow direction (E) of the medium flowing into the filter is parallel to the rotation axis (D) in the inlet region of the backflush filter (10).

8. Backflush filter according to one of claims 1 to 7, **characterised in that** a turbine wheel (60) is provided as drive for the rotary shaft (1).

9. Backflush filter according to claim 8, **characterised in that** the turbine wheel (60) is arranged in the mud chamber (6) of the backflush filter (10) on the inlet side and/or at the rotary shaft (1) or a flushing arm (35) on the inlet side in a torque-proof manner, whereby the diameter of the turbine wheel (60) is preferably equal or larger than the filter circuit (2) of the concentrically arranged filter elements (22).

10. Backflush filter according to one of claims 1 to 7, **characterised in that** the turbine wheel is arranged in the flow direction behind the filter elements.

11. Backflush filter according to claim 8 or 10, **characterised in that** a reduction gear which preferably runs in the medium or water between the turbine wheel and the rotary shaft, which limits the rotational speed of the rotary shaft or the flushing arms preferably to a maximum value of about 10 l/min and/or has a reduction ratio of 1:30 to 1:80.

12. Backflush filter according to one of claims 1 to 7, **characterised in that** the rotary shaft (1) is coupled to a drive unit (53) of an electric motor (54) and/or gear (55), of which preferably only the output shaft (52) projects into the inner chamber of the filter housing.

13. Backflush filter according to one of claims 1 to 12, **characterised in that** the outlet valve (50) can be actuated in an electrical or hydraulic manner and/or can be actuated by a control device which is provided with a measuring device measuring the differential pressure in the backflush filter.

14. Backflush filter according to claim 12 or 13, **characterised in that** the energy for the actuation of the drive unit (53), the control unit and/or of the outlet valve (50) is achieved by means of a solar panel (57) or the like.

15. Backflush filter according to one of claims 1 to 14, **characterised in that** the backflush filter is an irrigation filter.

16. Method for the backflushing of filters, in particular for water filtration, which comprise filter elements (22) arranged in a filter housing (11; 12) around a rotary shaft (1) in a concentric manner, open at both inflow ends (24; 34) whereby, during the filtration operation, both ends (24; 34) of the filter elements (22) are charged with an unfiltered medium flowing into the housing (11, 12) and which flows through the filter elements from the inside to the outside, and whereby, during the backflush operation, the filter elements (22) are connected by means of flushing members of a cleaning device to an outlet valve (60) for their individual or group cleaning, so that filtrate flows through the filter elements (22') in a counter-flow from the outside to the inside, whereby, during the backflush operation, the filter elements (22') are backflushed in a delayed and inverse manner, by first backflushing in one direction with a first flushing member (27) and a sealing member (38) assigned to the opposite end of the same filter element (22'), and then backflushing in the opposite direction at the other end (34') with a second flushing member (37) arranged in an offset manner in the rotary direction to the first flushing member (27) and the sealing member assigned thereto, **characterised in that**, during the inverse backflushing, the sealing members (28; 38) release the inflow end (24'; 34') before and/or after the sealing temporarily in a gap or sickle shape, while the opposite inlet end (34'; 24') with the flushing member (27; 37) is completely connected to the opened outlet valve (60) whereby backflushing of the walls of the filter elements (22) in the reverse flow is supported by a cross flow.

## Revendications

1. Filtre à rétrolavage, en particulier pour la filtration d'eau, comprenant des éléments filtrants disposés concentriquement autour d'un arbre rotatif dans le carter du filtre, ouverts aux deux extrémités d'entrée et disposés entre une première et une seconde plaque perforée, un fluide non filtré entrant dans le filtre à rétrolavage étant appliqué aux éléments filtrants par les deux extrémités lors du fonctionnement en filtration, lequel filtre comprend encore un dispositif de nettoyage pouvant être entraîné par l'intermédiaire de l'arbre rotatif et comprenant pour chaque cercle de filtration, pour le nettoyage individuel ou par groupes d'éléments filtrants lors du fonctionnement en rétrolavage, un premier organe de lavage qui est associé à la première plaque perforée et relié à une vanne d'évacuation, et un deuxième organe de lavage associé à la deuxième plaque perforée, chaque organe de lavage présentant une ouverture de raccordement pour raccorder la vanne d'évacuation à une extrémité d'entrée des éléments filtrants, et pour un rétrolavage à contre-courant décalé dans le temps le premier organe de lavage (27) est disposé décalé en direction de la rotation par rapport au deuxième organe de lavage (37) et un organe d'obturation (38, 28) est associé à l'extrémité d'entrée opposée aux premier et deuxième organes de lavage (27 ; 37), **caractérisé en ce que** les dimensions des ouvertures de raccordement (41) et/ou les dimensions des évidements (45) de plaques de tête (44) évidées intérieurement, associés aux organes de lavage (27, 37), sont plus grandes que les dimensions des organes d'obturation (38, 28), pour assister par un courant transversal le rétrolavage à contre-courant des parois des éléments filtrants (22), lors du fonctionnement en rétrolavage.

2. Filtre à rétrolavage selon la revendication 1, **caractérisé en ce que** le premier organe de lavage (27) est agencé décalé de 180° par rapport au deuxième organe de lavage (37) et de préférence un nombre impair d'éléments filtrants (22) sont disposés sur un cercle de filtration (2).

3. Filtre à rétrolavage selon la revendication 1 ou 2, **caractérisé en ce que** le premier organe de lavage (27) constitue avec l'organe obturateur (38) associé à la première plaque perforée (21) un premier bras de lavage (25) et le deuxième organe de lavage (37) constitue avec l'organe obturateur (38) associé à la deuxième plaque perforée (31) un deuxième bras de lavage (35).

4. Filtre à rétrolavage selon l'une des revendications 1 à 3, **caractérisé en ce que** les organes de lavage (27 ; 37) et organes obturateurs (28 ; 38) ou selon les cas les bras de lavage (25 ; 35) peuvent être agencés liés en rotation à l'arbre rotatif (1).

5. Filtre à rétrolavage selon l'une des revendications 1 à 4, **caractérisé en ce que** les organes d'obturation (28 ; 38) sont fixés de façon interchangeable sur les bras de lavage et/ou les plaques de tête (44) évidées intérieurement sont fixées de façon interchangeable sur les bras de lavage (25 ; 35).

6. Filtre à rétrolavage selon l'une des revendications 1 à 5, **caractérisé en ce que** les organes d'obturation (28 ; 38) et les plaques de tête (44) sont en matière plastique résistante à l'usure.

7. Filtre à rétrolavage selon l'une des revendications 1 à 6, **caractérisé en ce que** la direction d'écoulement (E) du fluide s'écoulant dans le filtre est parallèle à l'axe (D) de l'arbre rotatif dans la zone d'admission du filtre (10) à rétrolavage.

8. Filtre à rétrolavage selon l'une des revendications 1 à 7, **caractérisé en ce qu'**une roue de turbine (60) est prévue comme entraînement pour l'arbre rotatif (1).

9. Filtre à rétrolavage selon la revendication 8,
**caractérisé en ce que** la roue de turbine (60) est disposée dans la chambre pour fluide trouble (6) côté admission du filtre à rétrolavage (10) et/ou est montée fixe en rotation sur l'arbre rotatif (1) ou sur le bras de lavage (35) côté admission, le diamètre de la roue de turbine (60) étant de préférence égal ou plus grand que le cercle de filtration (2) des éléments filtrants (22) disposés concentriquement.

10. Filtre à rétrolavage selon l'une des revendications 1 à 7, **caractérisé en ce que** la roue de turbine est agencée derrière les éléments filtrants relativement à la direction d'écoulement.

11. Filtre à rétrolavage selon la revendication 8 ou 10, **caractérisé en ce qu'**un réducteur fonctionnant de préférence dans le fluide, le cas échéant l'eau, agencé entre la roue de turbine et l'arbre rotatif, limite la vitesse de rotation de l'arbre rotatif, le cas échéant des bras de lavage, de préférence à une valeur maximum d'environ 10t/mn et/ou possède un rapport de réduction de 1:30 à 1:80.

12. Filtre à rétrolavage selon l'une des revendications 1 à 7, **caractérisé en ce que** l'arbre rotatif (1) est couplé avec une unité d'entraînement (53) constituée d'un moteur électrique (54) et/ou d'une transmission (55), et de préférence seul leur arbre de sortie (52) pénètre dans l'intérieur du carter de filtre.

13. Filtre à rétrolavage selon l'une des revendications 1 à 12, **caractérisé en ce que** la vanne d'évacuation (50) peut être actionnée électriquement ou hydrauliquement et/ou peut être actionnée au moyen d'un dispositif de commande muni d'un dispositif de mesure mesurant la pression différentielle dans le filtre à rétrolavage.

14. Filtre à rétrolavage selon la revendication 12 ou 13, **caractérisé en ce que** l'énergie pour l'actionnement de l'unité d'entraînement (53), de l'unité de commande et/ou de la vanne d'évacuation (50) est produite au moyen d'un panneau solaire (57) ou analogue.

15. Filtre à rétrolavage selon l'une des revendications 1 à 14, **caractérisé en ce que** le filtre à rétrolavage est un filtre d'irrigation.

16. Procédé pour le rétrolavage de filtres, en particulier pour la filtration de l'eau, qui comprennent des éléments filtrants (22) ouverts aux deux extrémités d'entrée (24 ; 34), disposés dans un carter de filtre (11, 12) concentriquement autour d'un arbre rotatif (1), du fluide non filtré étant appliqué aux deux extrémités (24, 34) des éléments filtrants (22) lors du fonctionnement en filtration, ce fluide non filtré entrant dans le carter (11, 12) et traversant les éléments filtrants (22) de l'intérieur vers l'extérieur, alors qu'en fonctionnement en rétrolavage les éléments filtrants (22) sont raccordés à une vanne d'évacuation (60) pour leur nettoyage individuel ou par groupes par l'intermédiaire d'organes de lavage (27 ; 37) d'un dispositif de nettoyage, de sorte que du filtrat traverse les éléments filtrants (22') à contre-courant de l'extérieur vers l'intérieur, les éléments filtrants (22') étant rétrolavés à contre-courant et de manière décalée dans le temps lors du fonctionnement en rétrolavage, en ce sens que d'abord on procède au rétrolavage avec un premier organe de lavage (27) et un organe d'obturation (38) associé à l'extrémité opposée du même élément filtrant (22') dans une direction et plus tard on procède au rétrolavage dans la direction opposée à l'autre extrémité (34') avec un deuxième organe de lavage (37) disposé avec un décalage dans la direction de rotation par rapport au premier organe de lavage (27) et avec un organe d'obturation (28) associé au deuxième organe de lavage, **caractérisé en ce que** lors du rétrolavage à contre-courant, les organes d'obturation (28 ; 38) libèrent temporairement l'extrémité d'entrée (24' ; 34') sous la forme d'une fente ou d'un suintement avant et/ou après l'obturation, tandis qu'avec l'organe de lavage (27 ; 37) l'extrémité d'entrée opposée (34' ; 24') est complètement raccordée à la vanne d'évacuation ouverte (60), de sorte que le rétrolavage des parois des éléments filtrants (22) en contre-courant est assisté par un courant transversal.
